# EUROPEAN PATENT APPLICATION

(11) **EP 4 485 315 A1**
(43) Date of publication of application: **01.01.2025**
(21) Application number: 23758838.9
(22) Date of filing: 24.02.2023
(51) Int. Cl.: G06Q 20/06, G06Q 40/04, G06Q 50/06, G01R 11/00

(54) **DEVICE AND SYSTEM FOR MEASURING QUANTITIES, DATA PROCESSING AND INTEGRATION WITH A SYSTEM FOR ISSUING DIGITAL ASSETS OR TOKENS**

(30) Priority: 25.02.2022 BR 102022003697
(71) Applicant: THINGS GO ONLINE - CONSULTORIA, DESENVOLVIMENTO E TECNOLOGIA EM MÉTRICAS E TOKENS DE IMPACTOS AMBIENTAIS E SOCIAIS LTDA, São Paulo 01411- 001 (BR)
(72) Inventor: FERNANDES, Rodrigo Martins, 28030-570 Campos dos Goytacazes (BR); GONÇALVES JUNIOR, Marcos José Rangel, 28024-430 Campos dos Goytacazes (BR); GAMA, Hiago Santos Da, 28053-030 Campos dos Goytacazes (BR); REMER, Ricardo Amaral, 01411-010 São Paulo (BR); CARVALHO, Rogério Atem De, 28030-131 Campos dos Goytacazes (BR); GONÇALVES, Jéssica Maria Barroso, 28030-570 Campos dos Goytacazes (BR)
(74) Representative: Grünecker Patent- und Rechtsanwälte PartG mbB
(86) International application number: PCT/BR2023/050061
(87) International publication number: WO 2023/159292

(57) **Abstract**

The present invention is in the fields of measuring quantities related to energy conservation metrics, environmental conservation/recovery, and sustainability in general. More specifically, the invention relates to a device and system for measuring quantities, data processing and integration with a system for issuing digital assets or tokens, such as those ballasted by conservation and/or sustainability metrics. The device of the invention is particularly useful as a tool for measuring, documenting, and tokenizing in blockchain, distributed digital ledger platforms or technologies, quantities that have a direct relationship with metrics related to sustainable attitudes and/or projects or energy/environmental conservation.

## Description

### Field of the Invention

The present invention is in the fields of measuring quantities related to energy conservation metrics, environmental conservation/recovery, and sustainability in general. More specifically, the invention relates to a device and system for measuring quantities, data processing and integration with a system for issuing digital assets or tokens, such as those ballasted by conservation and/or sustainability metrics. The device of the invention is particularly useful as a tool for measuring, documenting, and tokenizing, in blockchain platforms or technologies, distributed digital ledger, quantities that have a direct relationship with metrics related to sustainable attitudes and/or projects or energy/environmental conservation.

### Background of the Invention

The technical field of measurement and recording systems is vast, with several approaches being known regarding the types of sensors (analog or digital), processing algorithms, validation of measured data, means of storage and provision of such data, as well as the methods used to guarantee the attributes of information, which are the qualities that information assets must maintain depending on the context in which they are inserted, among them: confidentiality, integrity and availability.

In this context, emerging technologies such as Distributed Ledger Technology (DLT), where Blockchain currently stands out, contribute to maintaining the attribute of information integrity, as they guarantee the immutability of the data stored or recorded in them, as well as contributing to maintaining the attribute of availability, when such technologies are implemented in the form of a distributed network of computers, called nodes, where the unavailability of a node does not affect the availability of the information that can be obtained by consulting other nodes participating in this distributed network.

In the specific field of sustainability, several initiatives called "sustainable" have emerged, but they face some technical problems, including the difficulty of measuring and/or tokenizing environmental conservation/sustainability metrics.

The present invention refers to the term "Joker" used to name a versatile and adaptable device for measuring quantities related to real metrics of environmental conservation and/or sustainability.

The State of the Art that encompasses the invention includes the following prior art documents.

Patent US11210751B2, granted on December 28, 2021, proposes a method and system for tracking and directing specific power generation sources in a power grid. A processor stores information about units of energy produced as transactions on a blockchain. A processor receives, from a terminal device of a plurality of terminal devices connected to a power grid, a request for a unit of energy represented on the blockchain. A processor sends an indication, to the terminal device, that the terminal device is allowed to consume the unit of energy from the power grid. A processor updates the blockchain to record the consumption of the unit of energy.

US10690707B2, granted on June 23, 2020, proposes a system for verifying a power generation source, which includes a key forming device that creates a key in a DC voltage signal generated by the power source, and a verification device that verifies the power generation source based on the key contained in the DC voltage signal.

Patent US11112132B2, granted on September 07, 2021, proposes a system for characterizing water in a building including a processor; a water sensor coupled to the processor; a water valve coupled to the processor; an encryption module executed by the processor to protect water data; and a transceiver for communicating secure water data over a network to a remote processor.

Patent US10762564B2, granted on September 01, 2020, proposes peer-to-peer autonomous energy networks operating on a blockchain. A blockchain configuration may be used to store a distributed ledger for an energy optimization procedure. An exemplary method of operation may include measuring energy metrics associated with devices operating on the network, using metering devices, identifying potential changes in the existing energy usage of the network based on the energy metrics, recording the energy metrics and potential changes as part of a distributed ledger, and storing the distributed ledger in a blockchain.

Patent US11150271B2, granted on October 19, 2021, proposes a method or system for managing the energy consumption of a device by applying a blockchain protocol. Energy-consuming devices can be individually and uniquely associated with a blockchain wallet to which funds can be transferred. The device can be provided with a client application that runs within the device to determine an energy supplier and the cost rate for the energy supply. The client application calculates an energy consumption value by the device and creates a blockchain transaction to transfer a financial value for the energy consumption from the device's blockchain wallet to a wallet of the energy supplier. By providing devices that can self-manage their electricity supply and the accounting thereof, energy billing can be decentralized from a meter that measures the entire supply of a facility to individual devices. This eliminates the need for a central billing entity, billing address, etc.

Patent US10727759B2, granted on July 28, 2020, proposes a so-called smart power inverter configured to convert electrical energy from a power source into electrical energy that can be injected into a power grid. Such an inverter comprises a power module and a controller with an address. The controller is configured to drive the power inverter based on the execution of smart contracts corresponding to the address, which may be from a blockchain network.

Patent application BR 10 2019 021409 0, entitled "Conservômetro, Equipment and System for Signal Transduction in Conservation Credits and for Documenting Metrics for Conservation or Recovery of Environmental Assets", was filed by Biotecam on October 11, 2019. Said document discloses and expands the concept of the *CONSERVÔMETRO*^{®}*,* which is an equipment or system for signal transduction in conservation credits and for documenting metrics for conservation or recovery of environmental assets, which include, but are not limited to: energy and/or fuel conservation; reduction of emissions of undesirable, polluting or greenhouse gases, such as carbon dioxide, methane and hydrogen sulfide, for example; large-scale capture of carbon dioxide; recovery and/or conservation of water quality in water bodies; effluent treatment; and combinations thereof. The concept of conservation measurement made technically feasible in the said document is particularly useful for measuring any initiative for conservation or recovery of environmental assets, with the metrics being documented and accredited by *CONSERVÔMETRO*^{®}*,* for the purpose of better parameterizing the environmental services market. In one embodiment of the said document, said metrics are authenticated and recorded in a distributed digital ledger, such as "ledgering" or "blockchaining" technologies. Said patent application, incorporated herein by reference, contemplates an approach used in the present invention as a way to measure physical quantities in real time and document the metrics associated with environmental conservation, also in real time, providing support for the respective digital assets subsequently recorded in distributed digital ledger systems.

Patent application BR 10 2021 001278 1 (still under confidentiality), entitled "Device and method for authentication of embedded hardware and/or software" was filed by Rogério Atem de Carvalho on January 22, 2021. Said document improves on the approaches for authentication of embedded hardware and/or software known until then. Said method comprises the steps of: a) obtaining an identified record of each unique hardware and software device; b) subsequently interrogating this same unique hardware and software device to compare said identified record obtained in the interrogation with that previously recorded; and c) identifying corruption, tampering and/or invasion/eavesdropping of the embedded hardware/software set when the comparison of the records does not result in a match. The approach is particularly useful for authenticating embedded hardware and/or software, identifying eavesdropping and/or tampering with hardware and/or software, locally or remotely, in a single instance, periodically or continuously - being useful, among others, for ensuring the reliability of data and/or metrics of technical and/or economic relevance measured by an integrated set of hardware and software. In one embodiment, said device and method is applied to authenticate the *CONSERVÔMETRO*^{®} which is the subject of patent application BR 10 2019 021409 0. Patent application BR 10 2021 001278 1, incorporated herein by reference, contemplates an approach used in the present invention as a way to authenticate the embedded hardware and software, which acts in the steps of measuring physical quantities and their authentication prior to the ledgerization or distributed digital assets ledgers.

The present invention is particularly useful for providing a tool for measuring real quantities associated with effective environmental conservation and/or the sustainability of projects and attitudes, which allows for their registration in blockchain and/or DLT networks for integration into digital asset or token issuance systems, such as the one that is the subject of the co-pending patent application with some of the present co-inventors in common, entitled "Integrated System and Method for the Issuance of Digital Assets or Tokens Ballasted by Authenticated Conservation Metrics", filed on the same date as the present patent application.

From what can be inferred from the literature researched, no documents were found anticipating or suggesting the teachings of the present creation/secret/invention. The invention herein disclosed has, in the inventors' point of view, novelty and inventive activity compared to the state of the art.

### Summary of the Invention

The invention relates to a device and system for measuring quantities, processing data, and integrating with a system for issuing digital assets or tokens in blockchain-type networks related to conservation and/or sustainability metrics.

Measuring quantities is vital to give objectivity to environmental conservation or recovery systems, avoiding what is called greenwashing, or actions that purport to achieve such preservation or recovery, but do not actually do so. By measuring physical quantities, the success or failure of the action is guaranteed in an objective and scientific manner.

The invention is particularly useful for providing a tool for measuring real quantities associated with effective environmental conservation and/or the sustainability of projects and attitudes, to enable their recording in blockchain-type and/or DLT networks for integration into systems for issuing digital assets or tokens ballasted by conservation metrics.

The device and system of the present invention is particularly useful for online documentation and tokenization in distributed digital ledger platforms or technologies metrics related to sustainable or environmental conservation attitudes and/or projects.

The device and system of the invention comprises:
- one or more devices or systems for measuring entities/quantities associated with the sustainability, conservation or recovery of environmental assets providing environmental conservation metrics; and
- a distributed or blockchain digital ledger process of authenticated metrics.

In one embodiment, said device or Joker comprises a processor, data storage memory, embedded software to process data of said measured quantities and transform them into information to be stored in the blockchain through the process of tokenizing the quantity of the measured quantity.

In one embodiment, said device or Joker comprises:
- a Joker base device (A) with processing capacity, data storage and embedded computer program/software;
- an electronic board (E) equipped with sensors for measuring physical quantities;
- one or more physical and logical interfaces (B) to provide communication (D) between the Joker processing unit (A) and the board processing unit (E);
- a network interface (C) that uses network communication media (J) to access a local computer network or the internet (I) and communicate with nodes (K) of a blockchain network.

It is another object of the invention to provide tokenized metrics of Conservation Credits related to the generation of electrical energy in solar panels.

In another embodiment, Joker is presented in the form of software embedded in a measuring device that performs computations, obtaining from the device's primary memory the quantities read from the medium and computing the electricity consumption metrics of the validating nodes (computers) of the XRP Ledger blockchain network. This embodiment is particularly useful for generating Conservation Credits according to a pre-established algorithm for this purpose, relative to the energy savings consumed when compared to the consumption of other forms of documenting assets via blockchain, such as Bitcoin or Ethereum. In this embodiment, the device is installed at the computer's power supply input (e.g., between the computer's power supply plug and an electrical outlet).

In another embodiment, Joker is presented in the form of a computer programming code installed in the validator nodes (computers) participating in the XRP Ledger blockchain network, which performs computations, obtaining from the primary memory of the computer where it is installed the quantities read directly from its motherboard (through its BIOS, for example). In this embodiment, Joker performs the computation of energy conservation metrics by using energy-efficient blockchain technology, when compared to other related/competing technologies and applications, generating Conservation Credits according to a pre-established algorithm. In this embodiment, the device is installed in the validator nodes (computers) of the XRP Ledger blockchain network, in the form of an independent software package or in the form of a computer code patch applied to the XRP Ledger open-source code.

It is another object of the invention, therefore, to provide tokenized metrics of Conservation Credits related to the electricity savings obtained through the use of energy-efficient blockchain technology when compared with other related/competing technologies and applications, in which the objective metric is that resulting from the reduction in electricity consumption in kWh and/or reduction in CO₂ emissions.

The invention is particularly useful for the online documentation of environmental conservation metrics, which serve as ballast for digital assets. The invention is a useful tool for boosting investments in green finance, in environmental recovery or conservation projects, in addition to providing real and online ballast for digital assets.

In one embodiment, the system of the invention measures in real time the amount of CO₂, CH₄ or other gases not emitted, H₂O conserved or recovered, energy (kWh) conserved or produced by renewable sources, among other conservation metrics, and records, in a distributed digital ledger, a digital asset ballasted by the respective conservation metrics.

These and other objects of the invention will be immediately valued by those skilled in the art and by companies with interests in the segment and it will be described in sufficient detail for their reproduction in the following description.

### Brief Description of the Figures

The following figures are presented:

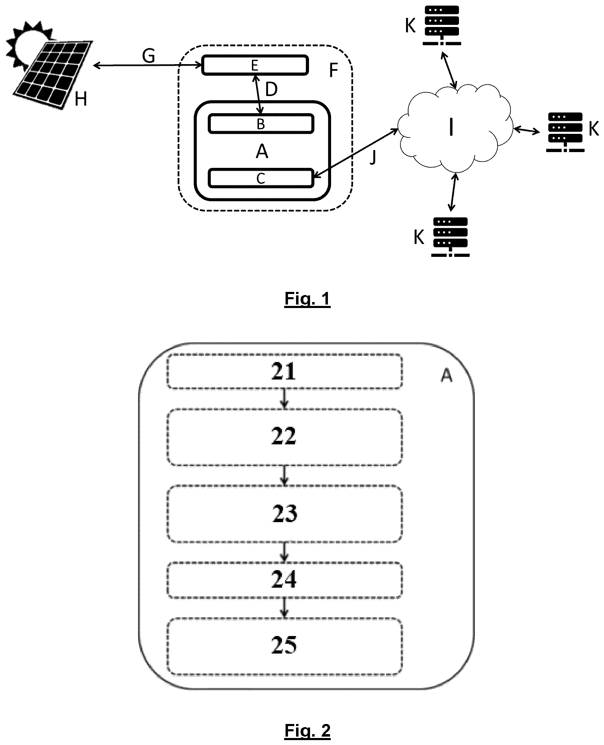

Fig. 1 shows an embodiment of Joker (A) or integrated device for measuring and tokenizing physical quantities - in this specific configuration also called Jokenergy (F), connected to a controller of a set of solar panels, to measure and tokenize online the kWh measurements generated by the solar panels with no emission of CO₂. The Joker base device (A) has the capacity to process and store data and computer programs. It also has a physical and logical interface (B) with an electronic board (E), responsible for performing single-phase or three-phase measurements of electrical energy allowing communication (D) between the Joker processing unit (A) and the board processing unit (E). The board (E) has current and voltage sensors that measure the energy produced by the photovoltaic solar electrical energy generation systems and that are sent (D) to Joker (A). Once the energy consumption data is in hand, Joker processes the data to transform it into information to be stored on the blockchain through the process of tokenizing the amount of measured electrical energy. This is done through Joker's (A) network interface (C), which uses network communication means (J) to access a local computer network or the internet (i) and communicate with the nodes (K) of a blockchain network.
Fig. 2 shows, in macro form, the sequence of tasks that are performed the first time the Joker is turned on. In 21, the initial verification step is represented; in 22, the creation of cryptographic artifacts; in 23, the storage of cryptographic artifacts; in 24, the specific configurations; and in 25, the configuration of the target blockchain account. Initially, the Joker performs an internal verification test to identify whether all of its modules are operating correctly and with no errors or failures. Next, the internal procedure of creating the public and private key pair, the account address, also known as the wallet address, in the blockchain, begins. These constitute the cryptographic artifacts that will be used in the procedure of sending transactions recording the quantities measured by the device in the blockchain, by sending the device tokens. These artifacts are stored internally in non-volatile memory and are protected against external access to the device. In some blockchain implementations, this procedure is followed by specific configurations, such as creating a trust line for the destination address to which the device tokens will be sent. The device then requests user intervention to configure the account address on the destination blockchain.

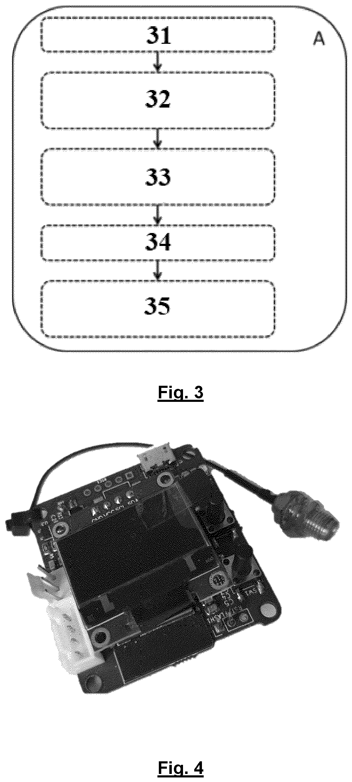

Fig. 3 shows, in macro form, the sequence of routine tasks (post-initialization) performed by Joker (A). In 31, the step of measuring the quantity is represented; in 32, the data processing; in 33, the assembly of the tokenization transaction; in 34, the cryptographic signature of the transaction; and in 35, the sending of the transaction to the blockchain. Initially, Joker (A) measures the quantity and then performs the data processing. Next, it constructs a specific transaction to record the information of the measured quantity in the form of a number of tokens in the blockchain. In a specific implementation in the XRP Ledger blockchain network, this transaction can be of the payment type or a trading order in the order book of the decentralized broker, native to this network. In the next step, the transaction is cryptographically signed with the device's private key, which is stored internally to the device and not accessible externally. Finally, the signed transaction is sent to the blockchain network.
Fig. 4 shows a real photograph of an embodiment of the device that is the subject of this patent, called Joker (letter "A" in the diagram in Fig. 1).

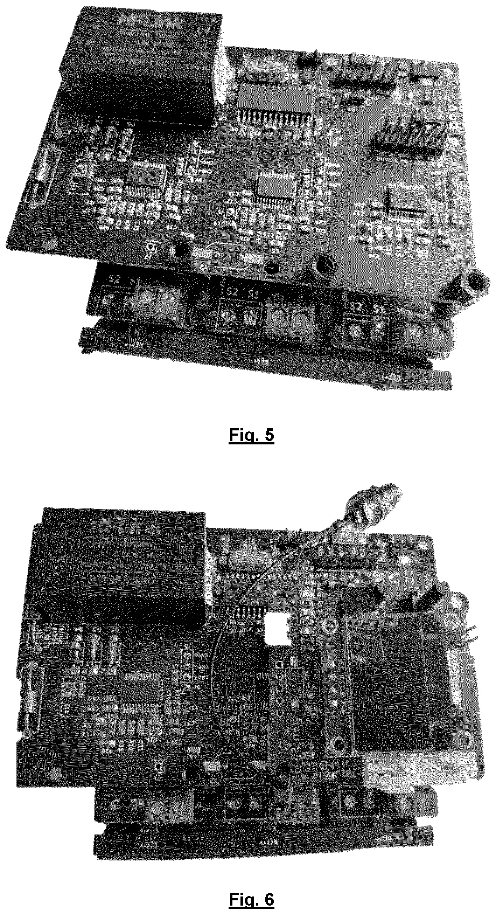

Fig. 5 shows a real photograph of an embodiment of the single-phase/three-phase electrical energy measuring board (letter "E" in the diagram in Fig. 1) with which the Joker device communicates to obtain the value of electrical energy consumed or generated by an electrical system.
Fig. 6 shows a real photograph of an embodiment of the Joker board connected directly (integrated) into the electrical energy measurement board, which configuration is called Jokenergy (letter "F" in the diagram in Fig. 1).

### Detailed Description of the Invention

The present invention provides, but is not limited to, an integrated device or system comprising computer program processing. The device or system of the invention includes at least one of the following aspects/means: i) a storage medium with computer-processed program instructions to cause a processor to execute aspects of the present invention; ii) communication interfaces with other devices or computer networks to allow the recording of measurements in computer networks, which may be of the Blockchain or Distributed Ledger Technology (DLT) type; iii) input and output interfaces for communication with various types of sensors and/or other devices, to perform the measurement of quantities that have a direct relationship with metrics related to attitudes and/or sustainable projects or energy/environmental conservation.

Optionally, the device additionally comprises a communication interface with an Authenticity Verification Device (AVD) to verify the authenticity of the hardware and software that make up the device that is the object of the present invention.

In one embodiment, the device is integrated into computing-capable devices, such as smartphones or computers, and comprises an installed or embedded computer program.

In one embodiment, the device and its computer program are integrated directly into electronic control units (ECUs) or in-vehicle infotainment (IVI) systems, thus enabling such units and systems to execute aspects of the present invention.

A relevant aspect of the invention is to provide a tool for measuring real quantities associated with environmental conservation and/or sustainability metrics, as well as their registration in Blockchain or DLT-type networks/systems to provide integration with a system for issuing digital assets or tokens ballasted by such real metrics, optionally authenticated.

The present invention operates in a system comprising a plurality of functional layers with high cohesion and low coupling, implemented in a combination of hardware and software. In one embodiment, said layers include: a) a layer corresponding to a calibrated measuring device/instrument/sensor; b) a layer corresponding to a data processing unit or computer device; c) a layer corresponding to a secure and accredited measuring device/instrument; d) a cryptography layer for performing transaction signatures in blockchain or DLT networks; e) a layer corresponding to a secure communications device/instrument.

In one embodiment, the present invention comprises: a calibrated instrumentation device that is a sensor; a computer device selected from a microcontroller, a PC, PC 104, a virtual machine or other computing architectures; a secure and accredited measuring device selected from software, a remotely installed software mirror, software in a virtual machine, firmware, programmable hardware of the Field Programmable Gate Array (FPGA) type, or Application Specific Integrated Circuit (ASIC). In one embodiment, said secure and accredited measuring device implements the steps of: a) reading the measured data from the primary memory of the computer device; b) checking and discarding spurious data; c) computing the conversion of the data into information according to the quantity read; and d) storing the generated information in the primary or secondary memory of the computer device.

In one embodiment, the present invention includes a means of verifying the authenticity of the secure measuring device selected from: encrypted key; hash or similar technique; remote storage in blockchain or DLT type networks or databases.

In one embodiment, the present invention includes a means for creating and securely storing a pair of public and private cryptographic keys, as well as the blockchain account address, which will be used to record in the blockchain the quantities measured by the device subject to the patent. In this embodiment, the device implements the following steps when the device is turned on for the first time: a) creation of a pair of public and private cryptographic keys and a blockchain account address; b) storage of this set of cryptographic artifacts in non-volatile memory internally in the device, with the appropriate security mechanisms to prevent external access; c) request for configuration of the account address in the blockchain to which the device tokens will be sent; d) storage of this address in non-volatile memory internally in the device. In this configuration, the cryptographic artifacts mentioned in item "a" are created as a procedure for the first power-on of the device and can only be replaced by a procedure for resetting the device to its factory conditions. In an alternative configuration, it is possible to allow the configuration of these artifacts through the user interface, however, depending on the application, such configuration may make the measurement process vulnerable to failures, whether intentional (tampering) or not.

The invention is also defined by the following provisions:
Device and integrated system for measuring physical quantities and issuing digital assets or tokens associated with environmental conservation and sustainability metrics comprising:
- one or more devices for measuring physical entities/quantities associated with the sustainability, conservation or recovery of environmental assets providing environmental conservation metrics; and
- a distributed or blockchain digital ledger process of metrics and the issuance of digital assets ballasted by said metrics.

Device as described above, comprising a processor, data storage memory, embedded software for processing data of said measured quantities and transforming them into information to be stored in the blockchain through the process of tokenizing the quantity of the measured quantity.

Device as described above, comprising:
- a Joker base device (A) with processing capacity, data storage and embedded computer program/software;
- an electronic board (E), equipped with sensors for measuring physical quantities;
- one or more physical and logical interfaces (B) to provide communication (D) between the Joker processing unit (A) and the board processing unit (E); and
- a network interface (C) that uses network communication means (J) to access a local computer network or the internet (I) and communicate with nodes (K) of a blockchain network.

Device as described above to provide tokenized metrics of Conservation Credits related to the generation of electrical energy in solar panels.

Device as described above, comprising:
- a Joker in the form of software embedded in a device for measuring the electrical power input of the computer that performs computations, obtaining from the device's primary memory the quantities read from the medium and computing the electrical power consumption metrics of the validating nodes (computers) of the XRP Ledger blockchain network; or
- a Joker in the form of a computer programming code installed in the validator nodes (computers) participating in the XRP Ledger blockchain network, which performs computations, obtaining from the primary memory of the computer where it is installed the quantities read directly from its motherboard.

Device as described above, installed on the validating nodes (computers) of the XRP Ledger blockchain network in the form of a standalone software package or in the form of a computer code patch applied to the XRP Ledger open-source code.

Device as described above to provide tokenized metrics of Conservation Credits related to electricity savings obtained through the use of energy-efficient blockchain technology when compared to other blockchain technologies and applications.

### Example 1 - Joker measuring and tokenizing sustainable energy generation metrics

In this embodiment, Joker is software embedded in a measuring device that performs computations, obtaining from the device's primary memory the physical quantities read from the environment and computing energy generation metrics by solar panels, generating Conservation Credits according to a pre-established algorithm for this purpose. In this embodiment, the device is installed in a control system of a set of solar panels. In this context, the source of Conservation Credits generation is the set of solar panels, and the objective metric is that resulting from the generation of kWh with no CO₂ emissions.

In this embodiment, the device, i.e., the credit measurement and computation system, is installed in the control system of the solar panel array as illustrated in Fig. 1. The measurement of physical quantities related to conservation metrics, together with the tokenization of the metrics and their online processing/communication, provides an environmental service provided by the set of solar panels in the form of energy generation (kWh) without greenhouse gas emissions. The corresponding Conservation Credits can be used by the owner of the solar panels, or by business owners who want or need said credits. Said credits are useful in: communicating social or environmental responsibility actions; using said Conservation Credits in environmental compensation measures; an open market for trading credits; or combinations thereof.

Referring to the figures, the figure shows an embodiment of Joker (A) or an integrated device for measuring and tokenizing physical quantities - in this specific configuration also called Jokenergy (F), connected to a controller of a set of solar panels, to measure and tokenize online the measurements of kWh generated by the solar panels, without emitting CO₂. The Joker base device (A) has the capacity to process and store data and computer programs. It also has a physical and logical interface (B) with an electronic board (E), responsible for performing single-phase or three-phase measurements of electrical energy, allowing communication (D) between the Joker processing unit (A) and the board processing unit (E). The board (E) has current and voltage sensors that measure the energy produced by the photovoltaic solar electrical energy generation systems and that are sent (D) to the Joker (A). Once the energy consumption data is in hand, Joker processes the data to transform it into information to be stored on the blockchain through the process of tokenizing the amount of measured electrical energy. This is done through Joker's (A) network interface (C), which uses network communication means (J) to access a local computer network or the internet (i) and communicate with the nodes (K) of a blockchain network.

Fig. 2 shows, in macro form, the sequence of tasks that are performed the first time the Joker is turned on. In 21, the initial verification step is represented; in 22, the creation of cryptographic artifacts; in 23, the storage of cryptographic artifacts; in 24, the specific configurations; and in 25, the configuration of the target blockchain account. Initially, the Joker performs an internal verification test to identify whether all of its modules are operating correctly and with no errors or failures. Next, the internal procedure of creating the public and private key pair, the account address, also known as the wallet address, in the blockchain, begins. These constitute the cryptographic artifacts that will be used in the procedure of sending transactions recording the quantities measured by the device in the blockchain by sending the device tokens. These artifacts are stored internally in non-volatile memory and are protected against external access to the device. In some blockchain implementations, this procedure is followed by specific configurations, such as creating a trust line for the destination address to which the device tokens will be sent. The device then requests user intervention to configure the account address on the destination blockchain.

Fig. 3 shows, in macro form, the sequence of routine tasks (post-initialization) performed by Joker (A). In 31, the step of measuring the quantity is represented; in 32, the data processing; in 33, the assembly of the tokenization transaction; in 34, the cryptographic signature of the transaction; and in 35, the sending of the transaction to the blockchain. Initially, Joker (A) measures the quantity and then performs the data processing. Next, it constructs a specific transaction to record the information of the measured quantity in the form of a quantity of tokens in the blockchain. In a specific implementation in the XRP Ledger blockchain network, this transaction can be of the payment type or a trading order in the order book of the decentralized broker, native to this network. In the next step, the transaction is cryptographically signed with the device's private key, which is stored internally to the device and not accessible externally. Finally, the signed transaction is sent to the blockchain network. Fig. 4 shows a real photograph of an embodiment of the device of the invention, called Joker (letter "A" in the diagram in Fig. 1).

Fig. 5 shows a real photograph of an embodiment of the single-phase/three-phase electrical energy measuring board (letter "E" in the diagram in Fig. 1) with which the Joker device communicates to obtain the value of electrical energy consumed or generated by an electrical system.

Fig. 6 shows a real photograph of an embodiment of the Joker board connected directly (integrated) into the electrical energy measurement board, a configuration called Jokenergy (letter "F" in the diagram in Fig. 1).

Those skilled in the art will immediately know that measurements obtained by a calibrated physical device give rise to online metrics, which, when tokenized according to the device and system of the invention, solve some of the technical problems mentioned above. Similarly, when the system includes the optional and additional step of authenticating the embedded hardware and software used in the measurement step and sending the corresponding signals to the tokenization system, those skilled in the art will know that the presence of a certifying entity is optional, since the authentication of the metrics obtained by online measurement provides an additional level of security to the system, solving other of the technical problems mentioned above. The technical dimension, also with several pieces of confidential information, includes the implementation of a proprietary system and/or technologies whose patent applications have not yet been disclosed.

### Example 2 - Joker measuring and tokenizing energy consumption metrics of XRP Ledger-type blockchain network nodes

In this embodiment, the Joker can be of two types: a) a software embedded in a measuring device that performs computations, obtaining from the device's primary memory the quantities read from the medium and computing the electricity consumption metrics of the validating nodes (computers) of the XRP Ledger blockchain network, generating Conservation Credits according to a pre-established algorithm for this purpose; or b) a computer programming code installed in the validating nodes (computers) participating in the XRP Ledger blockchain network, which performs computations, obtaining from the primary memory of the computer where it is installed the quantities read directly from its motherboard (through its BIOS, for example), computing energy conservation metrics through the use of energy-efficient blockchain technology when compared to other related/competing technologies and applications, generating Conservation Credits according to a pre-established algorithm for this purpose. In this "a"- type implementation, the device is installed at the computer's power supply input (e.g., between the computer's power supply plug and an electrical outlet). In the "b"- type implementation, the device is installed on the validating nodes (computers) of the XRP Ledger blockchain network, in the form of a standalone software package or in the form of a computer code patch applied to the XRP Ledger open-source code. In both contexts, the source of Conservation Credits generation is the electricity savings obtained by using energy-efficient blockchain technology, when compared to other related/competing technologies and applications, and the objective metric is that resulting from the reduction in electricity consumption in kWh, with a consequent reduction in CO₂ emissions.

The Applicant, when filing this application with the competent body/guarantor, seeks and intends to: (i) name the authors/inventors in respect of their respective moral, copyright and patrimonial rights related to their works; (ii) unequivocally indicate that he/she is the holder of the business or industrial secret and the holder of any form of intellectual property derived therefrom and that the applicant desires; (iii) describe in detail the content of the creations and the secret, proving their existence in the physical and legal planes; (iv) obtain protection for his/her creations of the spirit, as provided for in the Copyright Law; (v) establish the relationship between the examples/realizations and the creative, ornamental, distinctive or inventive concept according to the applicant's cognition and its context, to clearly demonstrate the scope of his/her protected and/or protectable intangible asset; (vi) request and obtain the additional rights provided for patents, if the Applicant chooses to continue with the administrative procedure until the end.

Any future disclosure or publication of this document does not, in itself, constitute authorization for commercial use by third parties. Even if the content becomes part of the physical world accessible to third parties, the disclosure or publication of this document under the terms of the law does not eliminate the legal status of secret, serving only and solely the spirit of the Law to: (i) serve as proof that the creator created the objects described herein and expressed them in a physical medium, which is this report itself; (ii) unequivocally indicate their owner/holder and authors/inventor(s); (iii) notify third parties of the existence of the creations and of the aforementioned industrial secret, of the content for which intellectual protection is or will be requested under the terms of the Law, including patent protection and the date of its filing, from which priority rights will be granted and the term of validity of patent exclusivity may begin, if applicable; and (iv) assist in the technological and economic development of the Country, from the revelation of the creation, if this occurs, and the authorization of the use of the secret solely and exceptionally for the purposes of studies and/or development of new improvements, thereby avoiding parallel reinvestment by third parties in the development of the same asset.

It is hereby noted that any commercial use requires authorization from the authors, or the owner/holder and that unauthorized use gives rise to sanctions provided for by law. In this context, given the extensive detail in which the creation, concept and examples were disclosed by the Applicant, those skilled in the art may, without much effort, consider other ways of implementing the present creation and/or invention in ways that are not identical to those merely exemplified above. However, such ways are or may be considered as within the scope of one or more of the attached claims.

## Claims

1. Device and integrated system for measuring physical quantities and issuing digital assets or tokens associated with environmental conservation and sustainability metrics **characterized in that** they comprise:
- one or more devices for measuring physical entities/quantities associated with the sustainability, conservation, or recovery of environmental assets, providing environmental conservation metrics; and
- a distributed or blockchain digital registration process of metrics and the issuance of digital assets ballasted by said metrics.

2. The device, according to claim 1, **characterized in that** it comprises: a processor, data storage memory, embedded software to process data of said measured quantities and transform them into information to be stored in the blockchain through the process of tokenizing the quantity of the measured quantity.

3. The device according to claim 1 or 2, **characterized in that** it comprises:
- a Joker base device (A) with processing capacity, data storage and embedded computer program/software;
- an electronic board (E), equipped with sensors for measuring physical quantities,
- one or more physical and logical interfaces (B), to provide communication (D) between the Joker processing unit (A) and the board processing unit (E); and
- a network interface (C) that uses network communication media (J) to access a local computer network or the internet (I) and communicate with nodes (K) of a blockchain network.

4. The device according to claim 1 or 2, **characterized in that** it comprises:
- a Joker in the form of software embedded in a device for measuring the electrical power input of the computer that performs computations, obtaining from the device's primary memory the quantities read from the medium and computing the electrical power consumption metrics of the validating nodes (computers) of the XRP Ledger blockchain network; or
- a Joker in the form of a computer programming code installed in the validating nodes (computers) participating in the XRP Ledger blockchain network, which performs computations, obtaining from the primary memory of the computer where it is installed the quantities read directly from its motherboard.

5. The device, according to claim 4, **characterized in that** it is installed on the validating nodes (computers) of an XRP Ledger blockchain network in the form of an independent software package or in the form of a computer code patch applied to the open-source code of the XRP Ledger.

6. The device, according to claim 3 or 4, **characterized in that** it provides tokenized metrics of Conservation Credits related to the electricity savings obtained through the use of energy-efficient blockchain technology when compared to other blockchain technologies and applications.
